Europäisches Patentamt

European Patent Office

Office européen des brevets

(11) Veröffentlichungsnummer: **0 151 982**
**A2**

(12) **EUROPÄISCHE PATENTANMELDUNG**

(21) Anmeldenummer: 85100722.9

(22) Anmeldetag: 24.01.85

(51) Int. Cl.⁴: **B 62 D 1/26**
**B 60 L 5/40**

(30) Priorität: 10.02.84 DE 3404805

(43) Veröffentlichungstag der Anmeldung:
21.08.85 Patentblatt 85/34

(84) Benannte Vertragsstaaten:
AT BE CH FR GB IT LI NL SE

(71) Anmelder: Uttscheid, Georg
Madronstrasse 17
D-8201 Rosenheim(DE)

(72) Erfinder: Uttscheid, Georg
Madronstrasse 17
D-8201 Rosenheim(DE)

(74) Vertreter: Wächtershäuser, Günter, Dr.
Tal 29
D-8000 München 2(DE)

(54) Selbstfahrender Bodentransporter.

(57) Es wird ein selbstfahrender Bodentransporter beschrieben, welcher wahlweise zur Führung mit einer Unterflur-Strom- und -Führungsschiene oder als nicht-schienengebundener Handwagen verwendet werden kann. Hierzu ist an einem Drehkranz einerseits ein aus der Unterflur-Strom- und -Führungsschiene herausziehbarer Stromabnehmerarm befestigt und andererseits ein an der Vorderachse an- und auskuppelbarer Elektromotor. Der Stromabnehmerarm wird durch Stützrollen in vertikaler Richtung auf der Unterflur-Strom- und -Führungsschiene abgestützt und innerhalb dieser Führungsschiene durch Führungsrollen seitlich geführt. Ein Stromabnehmerkopf ist um 90° um eine Vertikalachse drehbar, um beim Einführen in die Führungsschiene und bei der Entnahme aus der Führungsschiene die Schleifer vor einer Beschädigung zu schützen. Ferner trägt der Stromabnehmerarm einen Schienenräumbehälter, welcher beim Überfahren eines Schmutzsammelschachtes selbsttätig abwärts verschwenkt wird und dabei eine Öffnung freigibt, durch die die aus der Führungsschiene geräumten Fremdkörper in den Sammelschacht fallen. Bei der Weiterfahrt wird der Schienenräumbehälter durch Aufreiten auf dem Boden der Unterflur-Strom- und -Führungsschiene wieder selbsttätig in die normale Schließposition geschwenkt.

EA-4856

Georg Uttscheid

Rosenheim

---

## Selbstfahrender Bodentransporter

---

Die Erfindung betrifft einen selbstfahrenden Bodentransporter mit einem Elektromotor und einem Stromabnehmerarm für eine Unterflur-Strom- bzw. -Führungsschiene.

Selbstfahrende Bodentransporter dieser Art sind bereits
bekannt. Sie sind jedoch ausschließlich als schienengebundene Transporter zu verwenden und nicht wahlweise als Handwagen oder Anhängerwagen ohne Schienenführung
verwendbar. Außerdem sind ihre Antriebsvorrichtungen
zur Ermöglichung der Kurvenfahrt aufwendig. Schließlich kommt es bei selbstfahrenden Bodentransportern
dieser Art häufig zu einer Blockierung der versenkten
Unterflur-Strom- bzw. -Führungsschiene durch herabfallende Abfälle, Schrauben oder dergl.

Es ist somit Aufgabe der vorliegenden Erfindung, einen
selbstfahrenden Bodentransporter der eingangs genannten
Art derart weiterzubilden, daß er bei einfachem Aufbau
ohne weiteres von einem schienengebundenen Transporter
in einen nicht-schienengebundenen Wagen umgewandelt
werden kann. Außerdem soll der Bodentransporter die
versenkte Unterflur-Strom- bzw. -Führungsschiene selbsttätig von herabgefallenen Fremdkörpern befreien.

Diese Aufgabe wird erfindungsgemäß durch den Bodentransporter gemäß Hauptanspruch gelöst. Weitere vorteihafte Ausbildungen sind in den Unteransprüchen gekennzeichnet.

Im folgenden wird die Erfindung anhand von Zeichnungen
näher erläutert; es zeigen:

Fig. 1 eine schematische Darstellung des erfindungsgemäßen Bodentransporters in Seitenansicht;

Fig. 2 einen vergrößerten Längsschnitt durch
die Unterflur-Strom- bzw. -Führungsschiene mit dem
unteren Bereich des Stromabnehmerarms in drei verschiedenen Positionen;

Fig. 3 einen Schnitt entlang der Linie III-III

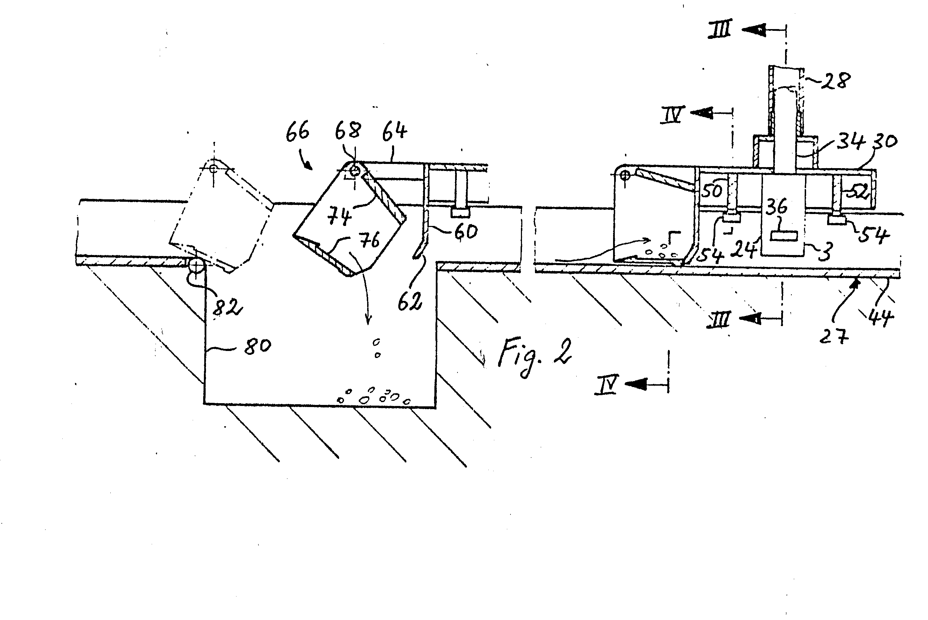

der Fig. 2; und

Fig. 4 einen Schnitt entlang der Linie IV-IV
der Fig. 2.

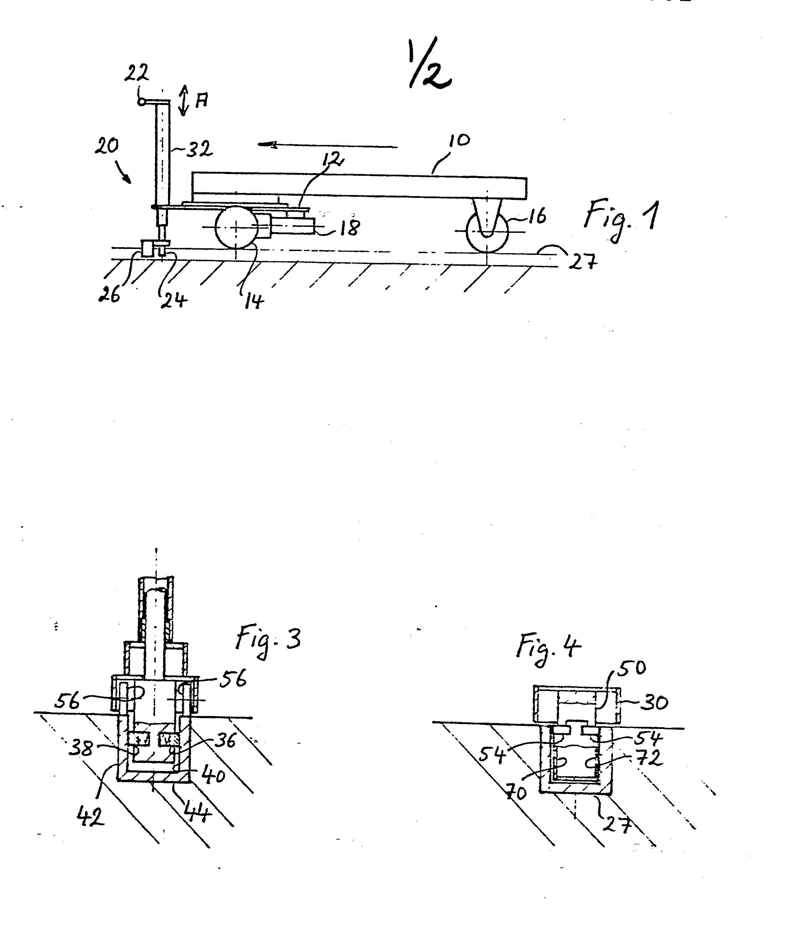

Der in Fig. 1 gezeigte Bodentransporter umfaßt eine Platte 10, auf die das zu transportierende Gut gelegt oder gestellt wird. Dabei kann es sich insbesondere auch um zu bearbeitende Werkstücke oder Vorrichtungen handeln. Im vorderen Bereich ist ein Drehkranz 12 um eine vertikale Achse drehbar an der Platte 10 gelagert. An diesem ist wiederum eine nichtgezeigte Achse gelagert, an der zwei Vorderräder 14 befestigt sind. Ferner sind zwei Hinterräder 16 frei auf einer nicht dargestellten Achse gelagert. Ein Elektromotor 18 dient dem Antrieb der Vorderachse. Er ist mit Hilfe einer nicht dargestellten Kupplungsvorrichtung wahlweise an die Vorderachse ankuppelbar und aus dieser auskuppelbar, jedoch stets am Drehkranz 12 befestigt. Im vorderen Bereich des Drehkranzes 12 ist ein Stromabnehmerarm 20 vorgesehen. Dieser trägt am oberen Ende einen Handgriff 22 für die Verwendung des Bodentransporters als Handwagen. Am unteren Ende trägt der Stromabnehmerarm 20 einen Stromabnehmerkopf 24 und einen Schienenräumbehälter 26, welche in Fig. 1 nur schematisch dargestellt sind. Sie ragen in eine als Rinne ausgebildete Unterflur-Strom- bzw. -Führungsschiene 30 hinein. Im folgenden soll die Arbeitsweise dieses Bodentransporters kurz erläutert werden. Der Elektromotor 18 wird über den Stromabnehmerarm 20 mit Strom versorgt und treibt die Vorderachse an. Dort, wo eine Kurvenfahrt erforderlich ist, liegt eine entsprechende Krümmung der Unterflur-Strom- bzw. -Führungsschiene vor. Da der Stromabnehmerarm in diese Schiene hineinragt, wird im Falle einer Kurve der Drehkranz selbsttätig gedreht, so daß der Bodentransporter auf einfache Weise selbsttätig der Führungsschiene folgt.

Da im Falle einer Kurvenfahrt die beiden Vorderräder unterschiedliche Winkelgeschwindigkeit haben, kann man natürlich ein Differentialgetriebe vorsehen. Eine wesentliche Vereinfachung ist jedoch möglich, wenn man die Vorderräder als Ausgleichsräder ausbildet, wie sie aus der deutschen Patentanmeldung P 31 28 824.3, auf die für Offenbarungszwecke ausdrücklich hingewiesen wird, bekannt sind. Dabei sind bei beiden Vorderrädern innere Radnaben fest mit der Achse verbunden, während ein äußerer Laufring im Gleitsitz auf den Naben sitzt und relativ zu diesen verdrehbar, aber nicht axial verschiebbar ist. Bei Geradeaus-Fahrt und bei ausreichendem Gewicht des Bodentransporters (Leergewicht oder Leergewicht plus Nutzlast) wird die Antriebskraft problemlos von den Radnaben auf die Laufringe übertragen. Im Falle einer Kurvenfahrt kommt es entsprechend der dem Krümmungsradius der Kurve entsprechenden Differenz der Winkelgeschwindigkeiten zu einem Schlupf der Außenlaufringe relativ zu den Naben. Auf diese Weise kann die Antriebsvorrichtung erheblich vereinfacht werden.

Falls der Bodentransporter unabhängig von der Führungsschiene als Handwagen oder Anhänger verwendet werden soll, so ist es lediglich erforderlich, den Stromabnehmerarm 20 gemäß der Pfeillinie A hochzuziehen und dabei aus der Führungsschiene herauszuziehen und weiterhin den Elektromotor 18 von der Vorderachse auszukuppeln.

Im folgenden soll der untere Bereich des Stromabnehmerarms 20, insbesondere der Stromabnehmerkopf 24 und der Schienenräumbehälter 26, näher erläutert werden. Hierzu wird auf die Fig. 2 bis 4 Bezug genommen. Fig. 2 zeigt rechts einen Schnitt durch den Stromabnehmerarm im Normalbetrieb. Dieser umfaßt eine Hohlstange 28, an deren unterem Ende ein Führungskörper 30 mitsamt dem Schienenräumbehälter 26 befestigt ist. Die Hohlstange 28 ist innerhalb eines am Drehkranz 12 befestigten Rohrs 32 drehbar und gemäß der Pfeillinie A in Fig. 1 längsverschiebbar gelagert. Im Inneren der Hohlstange 28 ist eine weitere Stange 34 drehbar gelagert, an deren unterem Ende der Stromabnehmerkopf 24 befestigt ist. Dieser umfaßt gemäß Fig. 3 zwei elektrisch voneinander getrennte, gefederte Schleifer 36, 38, welche an elektrisch voneinander isolierten Stromversorgungsschienen angreifen. Letztere sind in den beiden Seitenwandungen 40, 42 der Unterflur-Strom- bzw. -Führungsschiene 27 vorgesehen. Diese hat gemäß den Fig. 3 und 4 eine quadratische oder rechteckige Querschnittsgestalt mit den beiden senkrechten Seitenwandungen 40 und 42 und mit einem Boden 44. Durch Drehen der inneren Stange 34 relativ zur Hohlstange 28 kann man die beiden gefederten Schleifer außer Kontakt mit den Stromschienen bringen. In dieser Drehposition kann der Stromabnehmerkopf 24 problemlos in die Führungsschiene 27 eingeführt bzw. aus dieser entnommen werden, ohne daß die Gefahr einer Beschädigung der Schleifer besteht.

Der Führungskörper 30 umfaßt gemäß den Fig. 2 und 4 einen vorderen Lagerarm 50 sowie einen hinteren Lagerarm 52, welche an ihren unteren Enden insgesamt vier Führungsrollen 54 tragen. Diese sind den beiden Seitenwandungen 40, 42 der Führungsschiene 27 zugeordnet. Sie sorgen dafür, daß bei Geradeaus-Fahrt der Führungskörper 30 sowie der mit diesem verriegelte Stromabnehmerkopf 24 die für die ordnungsgemäße Stromzufuhr erforderliche Lageorientierung haben. Ferner sorgen
die Führungsrollen 54 dafür, daß bei Kurvenfahrt der
Führungskörper 30 sich entsprechend den Erfordernissen der Krümmung der Führungsschiene derart dreht,
daß die Schleifer stets in Angriff an den Stromschienen
gehalten werden.

Wie man aus Fig. 3 erkennt, sind im Inneren des Führungskörpers 30 zwei Stützrollen 56 gelagert, welche
auf den Boden, genauer gesprochen auf den oberen Ränder der Unterflur-Strom- bzw. -Führungsschiene 27, abrollen. Hierdurch wird sichergestellt, daß der Stromabnehmerkopf 24 und der Schienenräumbehälter 26 auch
unabhängig von etwaigen Unebenheiten des Bodens im
Bereich der Räder 14, 16 stets die richtige Position
in Vertikalrichtung einnehmen. Dies wird durch die
Längsverschiebbarkeit des Stromabnehmerarms 20 gemäß
der Pfeillinie A ermöglicht.

Am vorderen Ende des Führungskörpers 30 ist eine Rückwand 60 des Schienenräumbehälters 26 befestigt. Diese
weist einen leicht nach unten und vorn geneigten, unteren Randbereich 62 auf. Außerdem erstrecken sich
von der Rückwand 60 zwei Arme 64 nach vorne, an denen
ein beidseitig offener Rahmen 66 mit Hilfe von Wellenstummeln 68 schwenkbar gelagert ist. Der Rahmen 66
umfaßt zwei Seitenwandungen 70, 72, eine obere Wandung
74 und eine Bodenplatte 76, welche eine abgeschrägte
Vorderkante aufweist. Der Rahmen 66 ist in der in
Fig. 2 rechts dargestellten Position vorne offen und
hinten durch die stationäre Rückwand 60 verschlossen.
Fremdkörper, welche sich unvermeidlich in der Unterboden-Strom- und -Führungsschiene 27 ansammeln können, insbesondere Abfälle, Schrauben oder dergl., werden
von dem so gebildeten Schienenräumbehälter 26 aufgenommen und mitgeführt. Auf diese Weise wird ein
reibungsloser Betrieb gewährleistet und ein Kurzschluß durch Fremdkörper innerhalb der Führungsschiene
verhindert. Es sollte bemerkt werden, daß der Schienenräumbehälter 26, d.h. der Rahmen 66 und die Rückwand 60,
vorzugsweise aus einem isolierenden Material besteht,
so daß ein Kurzschluß zwischen den beiden Stromschienen verhindert wird.

An ausgewählten Positionen der Unterflur-Strom- und
-Führungsschiene 27 sind Schmutzsammelschächte 80 vorgesehen. Sobald der Schienenräumbehälter 26 in den
Bereich eines solchen Sammelschachtes 80 gelangt,
schwenkt der Rahmen 66 selbsttätig im Uhrzeigersinn
abwärts und gelangt in die in der Mitte der Fig. 2 gezeigte Position. Dabei werden die Fremdkörper, welche
sich im Schienenräumbehälter 26 angesammelt haben,
automatisch ausgeworfen. Bei der Weiterfahrt reitet
die Bodenwand 76 des Rahmens 66 auf Rollen 82 des
Schmutzsammelschachtes 80 auf, wie dies links in Fig. 2
in Phantomdarstellung gezeigt ist. Dabei wird der
Rahmen 66 wiederum im Gegenuhrzeigersinn zurückgeschwenkt, bis er die in Fig. 2 rechts dargestellte
Position einnimmt, in der der Rahmen einerseits hinten durch die Rückwand 60 vollständig verschlossen
ist, andererseits aber die vordere Kante der Bodenplatte 76 genügend dicht auf dem Boden 44 der Unterflur-
Strom- und -Führungsschiene 27 zu liegen kommt, so
daß Fremdkörper selbsttätig in den Schienenräumbehälter 26 geschoben werden.

- 8 -  0151982

Patentansprüche

1.    Selbstfahrender Bodentransporter mit einem
Elektromotor und einem Stromabnehmerarm für eine Unterflur-Strom- bzw. Führungsschiene, dadurch gekennzeichnet, daß der Elektromotor (18) in auskuppelbarer Antriebsverbindung mit der Lenkachse steht und der Stromabnehmerarm (20) aus der Unterflur-Strom- und -Führungsschiene (27) herausziehbar ist.

2.    Bodentransporter nach Anspruch 1, dadurch gekennzeichnet, daß die Lenkachse mit Ausgleichsrädern
(14) für Kurvenfahrt ausgerüstet ist, bei denen ein
äußerer Laufring relativ zu einer mit der Lenkachse
verbundenen Nabe im Gleitsitz drehbar ist.

3.    Bodentransporter nach einem der Ansprüche 1
oder 2, dadurch gekennzeichnet, daß der Stromabnehmerarm (20) einen in die Unterflur-Strom- und -Führungsschiene (27) ragenden, um eine vertikale Achse um 90°
drehbaren Stromabnehmerkopf (24) aufweist.

4.    Bodentransporter nach Anspruch 3, dadurch gekennzeichnet, daß der Stromabnehmerkopf (24) zwei
elektrisch voneinander getrennte, gefederte Schleifer
(36,38) aufweist.

5.    Bodentransporter nach einem der Ansprüche 1
bis 4, dadurch gekennzeichnet, daß der Stromabnehmerarm (20) durch Stützrollen (56) in vertikaler Richtung
auf der Unterflur-Strom- und -Führungsschiene (27) abgestützt ist.

6.     Bodentransporter nach einem der Ansprüche 1 bis 5, dadurch gekennzeichnet, daß der Stromabnehmerarm (20) durch mindestens zwei hintereinanderliegende Führungsrollen (54) mit vertikaler Drehachse seitlich geführt ist.

7.     Bodentransporter, insbesondere nach einem der Ansprüche 1 bis 6, dadurch gekennzeichnet, daß der Stromabnehmerarm (20) einen nach vorne offenen Schienenräumbehälter (26) aufweist.

8.     Bodentransporter nach Anspruch 7, dadurch gekennzeichnet, daß der Schienenräumbehälter (26) aus einer feststehenden Rückwand (60) und einem um eine horizontale Achse schwenkbaren Rahmen (66) besteht, welcher normalerweise durch den Boden (44) der Unterflur-Strom- und -Führungsschiene (27) in Schließstellung gehalten wird, bei Überfahren eines vertieften Schmutzsammelschachtes (80) selbsttätig abwärts in Auswurfstellung schwenkt und bei Verlassen des Schmutzsammelschachtes (80) wieder selbsttätig in Schließstellung aufwärts schwenkt.

9.     Bodentransporter nach Anspruch 8, dadurch gekennzeichnet, daß der Schmutzsammelschacht (80) Rollen (82) aufweist, auf die der Rahmen (66) beim selbsttätigen Aufwärtsschwenken aufreitet.

½

Fig. 1

Fig. 3

Fig. 4

Fig. 2